# EUROPEAN PATENT APPLICATION

(11) **EP 4 539 557 A1**
(43) Date of publication of application: **16.04.2025**
(21) Application number: 23823169.0
(22) Date of filing: 14.06.2023
(51) Int. Cl.: H04W 52/02

(54) **ENERGY-SAVING WAKE-UP METHOD AND APPARATUS, AND TERMINAL, BASE STATION AND STORAGE MEDIUM**

(30) Priority: 14.06.2022 CN 202210674982
(71) Applicant: Vivo Mobile Communication Co., Ltd., Dongguan, Guangdong 523863 (CN)
(72) Inventor: HONG, Qi, Dongguan, Guangdong 523863 (CN); LI, Jianhui, Dongguan, Guangdong 523863 (CN); LI, Gen, Dongguan, Guangdong 523863 (CN); PAN, Xueming, Dongguan, Guangdong 523863 (CN)
(74) Representative: Shieldmark
(86) International application number: PCT/CN2023/100084
(87) International publication number: WO 2023/241602

(57) **Abstract**

This application pertains to the field of communication technologies, and discloses an energy-saving wakeup method and apparatus, a terminal, a base station, and a storage medium. The energy-saving wakeup method in embodiments of this application includes: sending, by a terminal, an energy-saving wakeup signal, where the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

## Description

### CROSS-REFERENCE TO RELATED APPLICATIONS

This application claims priority to Chinese Patent Application No. 202210674982.7, filed on June 14, 2022 and entitled "ENERGY-SAVING WAKEUP METHOD AND APPARATUS, TERMINAL, BASE STATION, AND STORAGE MEDIUM", which is incorporated herein by reference in its entirety.

### TECHNICAL FIELD

This application pertains to the field of communication technologies, and specifically relates to an energy-saving wakeup method and apparatus, a terminal, a base station, and a storage medium.

### BACKGROUND

In a network energy saving technology, there may be a possibility that some base stations are in an off state or a sleep state. In these states, the base stations may completely disable downlink transmission; enable only part of uplink reception functions; turn off some hardware, for example, some antennas or ports (port); or extend a transmission cycle of a common signal (common signal), or the like, thereby achieving an objective of energy saving.

User equipment (User Equipment, UE) (for example, a terminal) may send a wakeup signal WUS to implement the following: waking up these base stations in an energy-saving state; switching the base station from deep sleep to light sleep; allowing the base station to turn on all hardware that is turned off; reducing the transmission cycle of the common signal, and the like. Based on the foregoing considerations, it may be necessary for the WUS signal to carry some information, to better assist the base station in 'wakeup'.

However, if the WUS of the UE is a preamble (preamble), and the preamble cannot carry bit information (bits), the WUS cannot assist the base station in wakeup.

### SUMMARY

Embodiments of this application provide an energy-saving wakeup method and apparatus, a terminal, a base station, and a storage medium to resolve a problem of inability to assist a base station in wakeup.

According to a first aspect, an energy-saving wakeup method is provided. The method includes:
sending, by a terminal, an energy-saving wakeup signal, where
the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

According to a second aspect, an energy-saving wakeup method is provided. The method includes:
receiving, by a first base station, an energy-saving wakeup signal; and
performing, by the first base station, energy-saving processing based on first information in the energy-saving wakeup signal, where
the energy-saving wakeup signal includes a preamble sequence.

According to a third aspect, an energy-saving wakeup method is provided. The method includes:
receiving, by a second base station, an energy-saving wakeup signal; and
waking up, by the second base station based on first information in the energy-saving wakeup signal, a first base station indicated by the first information, where the first information includes a base station identity of the first base station, where
the energy-saving wakeup signal includes a preamble sequence, and the base station identity of the first base station corresponds to the preamble sequence.

According to a fourth aspect, an energy-saving wakeup method is provided. The method includes:
receiving, by a second base station, an SSB measurement result; and
waking up, by the second base station based on the SSB measurement result, a first base station indicated by the SSB measurement result.

According to a fifth aspect, an energy-saving wakeup apparatus is provided. The apparatus includes:
a first sending module, configured to send an energy-saving wakeup signal, where
the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

According to a sixth aspect, an energy-saving wakeup apparatus is provided. The apparatus includes:
a first receiving module, configured to receive an energy-saving wakeup signal; and
a first processing module, configured to perform energy-saving processing based on first information in the energy-saving wakeup signal, where
the energy-saving wakeup signal includes a preamble sequence.

According to a seventh aspect, an energy-saving wakeup apparatus is provided. The apparatus includes:
a second receiving module, configured to receive an energy-saving wakeup signal; and
a first wakeup module, configured to wake up, based on first information in the energy-saving wakeup signal, a first base station indicated by the first information, where the first information includes a base station identity of the first base station, where
the energy-saving wakeup signal includes a preamble sequence, and the base station identity of the first base station corresponds to the preamble sequence.

According to an eighth aspect, an energy-saving wakeup apparatus is provided. The apparatus includes:
a third receiving module, configured to receive an SSB measurement result; and
a second wakeup module, configured to wake up, based on the SSB measurement result, a first base station indicated by the SSB measurement result.

According to a ninth aspect, a terminal is provided. The terminal includes a processor and a memory. The memory stores a program or instructions executable on the processor. When the program or instructions are executed by the processor, the steps of the method according to the first aspect are implemented.

According to a tenth aspect, a terminal is provided and includes a processor and a communication interface. The communication interface is configured to:
send an energy-saving wakeup signal, where
the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

According to an eleventh aspect, a first base station is provided. The first base station includes a processor and a memory. The memory stores a program or instructions executable on the processor. When the program or instructions are executed by the processor, the steps of the method according to the second aspect are implemented.

According to a twelfth aspect, a first base station is provided and includes a processor and a communication interface. The communication interface is configured to:
receive an energy-saving wakeup signal; and
the processor is configured to:
   perform energy-saving processing based on first information in the energy-saving wakeup signal, where
   the energy-saving wakeup signal includes a preamble sequence.

According to a thirteenth aspect, a second base station is provided. The second base station includes a processor and a memory. The memory stores a program or instructions executable on the processor. When the program or instructions are executed by the processor, the steps of the method according to the third aspect are implemented.

According to a fourteenth aspect, a second base station is provided and includes a processor and a communication interface. The communication interface is configured to:
receive an energy-saving wakeup signal; and
the processor is configured to:
   wake up, based on first information in the energy-saving wakeup signal, a first base station indicated by the first information, where the first information includes a base station identity of the first base station, where
   the energy-saving wakeup signal includes a preamble sequence, and the base station identity of the first base station corresponds to the preamble sequence.

According to a fifteenth aspect, a second base station is provided. The second base station includes a processor and a memory. The memory stores a program or instructions executable on the processor. When the program or instructions are executed by the processor, the steps of the method according to the fourth aspect are implemented.

According to a sixteenth aspect, a second base station is provided and includes a processor and a communication interface. The communication interface is configured to:
receive an SSB measurement result; and
the processor is configured to:
   wake up, based on the SSB measurement result, a first base station indicated by the SSB measurement result.

According to a seventeenth aspect, an energy-saving wakeup system is provided and includes a terminal, a first base station, and a second base station. The terminal may be configured to perform the steps of the energy-saving wakeup method according to the first aspect. The first base station may be configured to perform the steps of the energy-saving wakeup method according to the second aspect. The second base station may be configured to perform the steps of the energy-saving wakeup method according to the third aspect or the fourth aspect.

According to an eighteenth aspect, a readable storage medium is provided. The readable storage medium stores a program or instructions. When the program or instructions are executed by a processor, the method according to the first aspect is implemented, or the method according to the second aspect is implemented, or the method according to the third aspect is implemented, or the method according to the fourth aspect is implemented.

According to a nineteenth aspect, a chip is provided. The chip includes a processor and a communication interface. The communication interface is coupled to the processor. The processor is configured to run a program or instructions to implement the method according to the first aspect, or implement the method according to the second aspect, or implement the method according to the third aspect, or implement the method according to the fourth aspect.

According to a twentieth aspect, a computer program or program product is provided. The computer program or program product is stored in a storage medium. The computer program or program product is executed by at least one processor to implement the method according to the first aspect, or implement the method according to the second aspect, or implement the method according to the third aspect, or implement the method according to the fourth aspect.

In the embodiments of this application, the wakeup signal including the preamble sequence carries the first information, to indicate the energy-saving processing to be performed after the first base station is woken up and assist the first base station in energy saving.

### BRIEF DESCRIPTION OF DRAWINGS

FIG. 1 is a block diagram of a wireless communication system to which an embodiment of this application may be applied;
FIG. 2 is a schematic flowchart of a four-step RACH according to the related art;
FIG. 3 is a schematic diagram of comparison between a two-step RACH and a four-step RACH according to the related art;
FIG. 4 is a schematic diagram of a wakeup signal based on a PDCCH according to the related art;
FIG. 5 is a first schematic flowchart of an energy-saving wakeup method according to an embodiment of this application;
FIG. 6 is a second schematic flowchart of an energy-saving wakeup method according to an embodiment of this application;
FIG. 7 is a third schematic flowchart of an energy-saving wakeup method according to an embodiment of this application;
FIG. 8 is a fourth schematic flowchart of an energy-saving wakeup method according to an embodiment of this application;
FIG. 9 is a first schematic diagram of a structure of an energy-saving wakeup apparatus according to an embodiment of this application;
FIG. 10 is a second schematic diagram of a structure of an energy-saving wakeup apparatus according to an embodiment of this application;
FIG. 11 is a third schematic diagram of a structure of an energy-saving wakeup apparatus according to an embodiment of this application;
FIG. 12 is a fourth schematic diagram of a structure of an energy-saving wakeup apparatus according to an embodiment of this application;
FIG. 13 is a schematic diagram of a structure of a communication device according to an embodiment of this application;
FIG. 14 is a schematic diagram of a hardware structure of a terminal for implementing an embodiment of this application;
FIG. 15 is a schematic diagram of a hardware structure of a first base station for implementing an embodiment of this application;
FIG. 16 is a first schematic diagram of a hardware structure of a second base station for implementing an embodiment of this application; and
FIG. 17 is a second schematic diagram of a hardware structure of a second base station for implementing an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

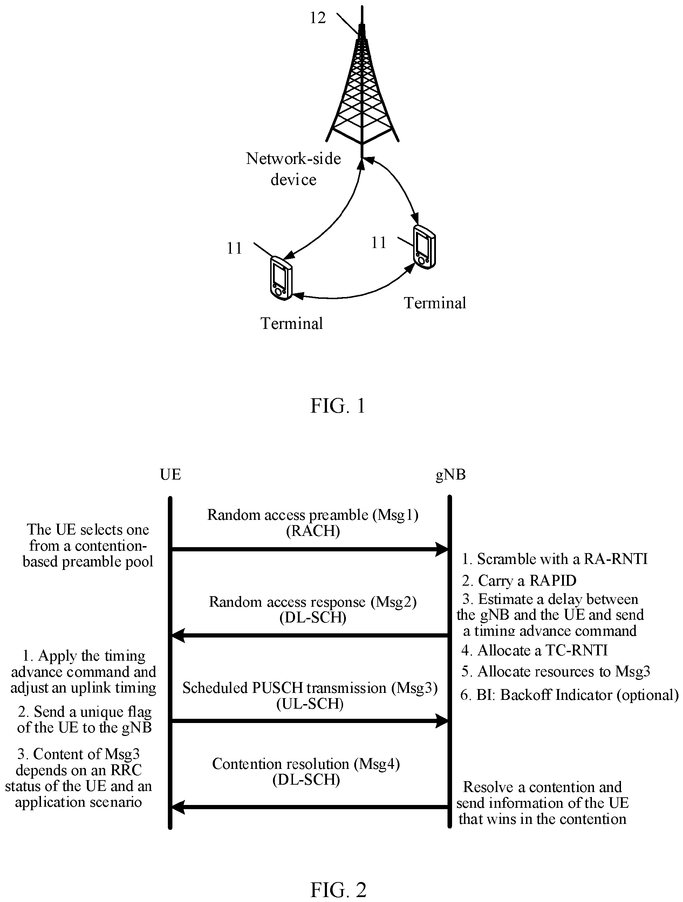

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

An energy-saving wakeup method and apparatus, a terminal, a base station, and a storage medium provided in embodiments of this application are hereinafter described in detail by using some embodiments and application scenarios thereof with reference to the accompanying drawings.

### First, the following content is described.

### (1) Preamble (Preamble)

After performing a cell search process and obtaining system information, UE achieves downlink synchronization with a cell, and the UE can receive downlink data. However, the UE can perform uplink transmission only after the UE achieves uplink synchronization with the cell. The UE establishes a connection with the cell through a random access procedure (Random Access Procedure) and achieves uplink synchronization. After the random access procedure succeeds, the UE may be in a radio resource control (Radio Resource Control, RRC) connected state, and may perform normal uplink and downlink transmission with a network. Main purposes of random access are: (1) to achieve uplink synchronization; (2) Allocate a unique identifier: a cell radio network temporary identifier (Cell Radio Network Temporary Identifier, C-RNTI), to the UE.

Step 1 of the random access procedure is that the UE sends a random access preamble (Random Access preamble). A main function of the preamble is to notify a base station (gNB) of a random access request, and to enable the gNB to estimate a transmission delay between the gNB and the UE, so that the gNB can calibrate an uplink timing (uplink timing) and notify the UE of calibration information by using a timing advance command (timing advance command) in a RAR.

A preamble sequence is generated by cyclically shifting a root ZC sequence (root Zadoff-Chu sequence). 64 preambles are defined for each physical random access channel (Physical Random Access Channel, PRACH) time-frequency occasion, and the 64 preambles are numbered in ascending order of cyclic shifts N_cs of logical root sequences, and then in ascending order of different logical root sequences. If 64 preambles cannot be obtained through cyclic shifting based on a single root sequence, remaining preamble sequences are generated by using a root sequence corresponding to a next index until all the 64 preambles are generated.

### (2) Four-step random access channel (4-step RACH) and two-step random access channel (2-step RACH)

Optionally, a RACH procedure may be classified into a four-step RACH and a two-step RACH.

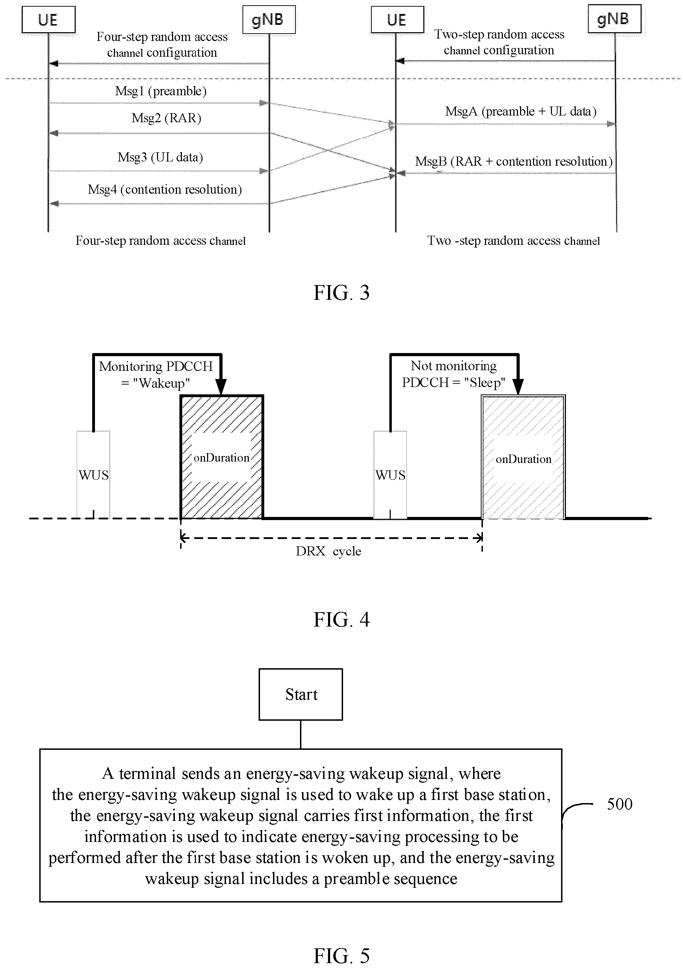

FIG. 2 is a schematic flowchart of a four-step RACH according to the related art. FIG. 3 is a schematic diagram of comparison between a two-step RACH and a four-step RACH according to the related art. As shown in FIG. 2 and FIG. 3, a difference between the two-step RACH and the four-step RACH is roughly shown in the figures. To be specific, MsgA (Message A) includes information of Msg1 and Msg3 in the four-step RACH. MsgB includes information of Msg2 and Msg4.

MsgA includes a preamble and a payload, similar to a combination of Msg1 + Msg3, but it is necessary to sequentially send a MsgA preamble and a MsgA payload (carrying some information, such as a UE flag). In the 4-step RACH, a RAR may carry a physical uplink shared channel (Physical Uplink Shared Channel, PUSCH) resource for sending Msg3, but in the 2-step RACH, a MsgA PUSCH may be sent along with a MsgA preamble. Therefore, a resource of the MsgA PUSCH needs to be indicated to the UE before the RACH is initiated.

In time domain, msgA-PUSCH-TimeDomainOffset indicates a slot offset between a slot (slot) in which a first MsgA PO (Physical Random Access Channel occasion, physical random access channel occasion) is located and a slot in which a PRACH occasion is located, a total of nrofSlotsMsgA-PUSCH consecutive slots. There are nrofMsgA-PO-perSlot consecutive MsgA POs in each slot. In addition, a parameter may indicate time domain allocation of each MsgA PO in a manner similar to uplink DCI indicating PUSCH resource allocation, that is, a parameter is used to indicate a start position and a length.

In frequency domain, nrofMsgA-PO-FDM continuous frequency division multiplexing (Frequency Division Multiplexing, FDM) MsgA PUSCH occasions support an RB-level configurable guard band, which may be indicated by a parameter guardBandMsgA-PUSCH.

### (3) Downlink wakeup signal (DL WUS)

FIG. 4 is a schematic diagram of a wakeup signal based on a PDCCH according to the related art. As shown in FIG. 4, to further improve power-saving performance of UE in a 5G system, a wakeup signal (Wake Up Signal, WUS) based on a physical downlink control channel (Physical downlink control channel, PDCCH) may be introduced. A function of the WUS is to notify the UE whether the PDCCH needs to be monitored during an onDuration (onDuration) of discontinuous reception (Discontinuous Reception, DRX). When there is no data, the UE may not need to monitor the PDCCH during the onDuration, which means that the UE may be in a sleep state throughout a DRX long cycle, thereby further saving power.

In the related art, the WUS signal is downlink control information (Downlink Control Information, DCI), DCP (DCI with CRC scrambled by PS-RNTI) for short. The PS-RNTI is a radio network temporary identifier (Radio Network Temporary Identifier, RNTI) specially allocated by the network to the UE for a power-saving feature, and the DCI scrambled by this RNTI carries a wakeup/sleep indication of the network to the UE. Based on the indication, the UE determines whether to start an onDuration timer in a next discontinuous reception (Discontinuous Reception, DRX) cycle and whether to monitor the PDCCH.

FIG. 5 is a first schematic flowchart of an energy-saving wakeup method according to an embodiment of this application. As shown in FIG. 5, the energy-saving wakeup method includes the following step.

Step 500: A terminal sends an energy-saving wakeup signal, where
the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

Optionally, the first base station may be a base station to be woken up in an energy-saving state.

Optionally, the first base station may be a wakeup target of the terminal.

Optionally, the energy-saving wakeup signal may be referred to as a WUS, a UE WUS, or a WUS signal.

Optionally, in a case that the UE WUS is a preamble, because the preamble cannot carry bits to indicate information, in this embodiment of this application, the terminal may send the energy-saving wakeup signal including the preamble sequence, where the energy-saving wakeup signal is used to carry the first information to indicate energy-saving processing to be performed after the first base station is woken up.

Optionally, in this embodiment of this application, the UE sends the energy-saving wakeup signal, where the first information carried in the energy-saving signal is used to assist the first base station in energy-saving processing.

In this embodiment of this application, the wakeup signal including the preamble sequence carries the first information, to indicate the energy-saving processing to be performed after the first base station is woken up and assist the first base station in energy saving.

Optionally, the first information includes at least one of the following:
a terminal identity of the terminal;
a base station identity of the first base station;
transmit power of the terminal;
a cycle of a common signal expected by the terminal;
location information of the terminal;
a priority or a size of data of the terminal;
beam information or beam configuration information determined by the terminal;
an identity of a tracking area in which the terminal is located; or
preset information, where the preset information is used to demodulate the energy-saving wakeup signal.

Optionally, information carried in the WUS may include any one or more of the following:
(1) A terminal identity (UE ID) of the terminal,
   for example, a globally unique temporary UE identity (Globally Unique Temporary UE Identity, GUTI), a temporary mobile subscriber identity (Temporary Mobile Subscriber Identity, TMSI), or other similar terminal identities that can uniquely identify the terminal.

Optionally, a second base station (which may correspond to a serving cell (Serving cell) of the terminal) may synchronize the following to the first base station in the energy-saving state: The UE will send or is sending the WUS signal; and notify the first base station of the UE ID of the terminal. After blind detection, the first base station in the energy-saving state may obtain the UE ID through parsing before starting to 'wake up'.

Optionally, the second base station may be a serving base station of the terminal.

(2) A base station identity (which may be, for example, a cell ID) of the first base station.

Optionally, for the first base station, in a case that there are a plurality of first base stations in the energy-saving state, only the first base station that detects a cell having the same ID information 'wakes up'.

Alternatively, the second base station wakes up the first base station in the energy-saving state via a network side (a higher layer, such as an Xn interface) based on the base station identity of the first base station.

(3) Transmit power of the terminal.

Optionally, for the first base station, the first base station in the energy-saving state may estimate a UL WUS path loss based on transmit power of the terminal and measurement of reference signal received power RSRP, and may properly adjust downlink power to serve the UE.

(4) A cycle of a common signal expected by the terminal, that is, a cycle of the common signal desired by the UE.

Optionally, the first base station in the energy-saving state may use a longer SSB cycle in a case that functions such as initial access, downlink synchronization, and interference measurement are implemented by a synchronization signal/physical broadcast channel signal block (or synchronization signal block) (Synchronization Signal and PBCH block, SSB) signal. If the UE detects downlink out-of-synchronization or inaccurate measurement, the terminal may notify the first base station of the desired SSB cycle by using the WUS.

(5) Location information of the terminal.

Optionally, the first base station in the energy-saving state may determine, based on the location information of the terminal, whether it is necessary to 'wake up'.

Optionally, the first base station in the energy-saving state may also be replaced with a cell in a cell energy-saving state in energy-saving mode. This is applicable to various embodiments of this application.

(6) A priority or a size of data of the terminal.

Optionally, in a case that a priority of data currently transmitted or received by the UE is high, if a current status cannot meet requirements of data transmission or reception of the UE, the first base station in the energy-saving state may 'wake up'.

(7) Beam information or beam configuration information determined by the terminal.

Optionally, if the first base station in the energy-saving state still sends SSB information, the UE may obtain a preferred beam of the first base station in the energy-saving state when performing neighboring cell measurement in a serving cell. The terminal may notify the first base station in the energy-saving state by using the WUS. The first base station in the energy-saving state may selectively send a beam (selectively turn on some hardware devices, such as a PA) based on the information.

(8) Preset information, where the preset information is used to demodulate the energy-saving wakeup signal.

Optionally, the preset information (which may also be referred to as a designated signal or a special signal) is a signal predefined in a protocol and dedicated to WUS demodulation. The first base station in the energy-saving state may wake up after receiving and demodulating the content.

(9) An identity of a tracking area in which the terminal is located, that is, a tracking area ID.

Optionally, in a case that there are a plurality of first base stations in the energy-saving state, only the first base station that detects a cell having the same tracking area ID information 'wakes up'.

Optionally, the energy-saving wakeup signal includes one or more preamble sequences, or the energy-saving wakeup signal includes a preamble sequence and a payload.

Optionally, the terminal sends the energy-saving wakeup signal, where the energy-saving wakeup signal may include one or more preamble sequences or include a combination of a single preamble sequence and a payload.

Optionally, in a case that the energy-saving wakeup signal includes a plurality of preamble sequences, the plurality of preamble sequences jointly carry the first information, where each of the plurality of preamble sequences carries 1-bit content of the first information.

Optionally, in a case that the energy-saving wakeup signal includes a plurality of preamble sequences, the plurality of preamble sequences may jointly carry the first information carried in the energy-saving wakeup signal.

Optionally, when the plurality of preamble sequences jointly carry the first information, each preamble sequence may implicitly represent that 1-bit information is carried. Time-frequency domain locations of the plurality of preamble sequences may be in TDM mode and/or FDM mode.

Optionally, when the plurality of preamble sequences jointly carry the first information, a quantity of the plurality of preamble sequences and time-frequency domain locations thereof may be configured for the UE by the tracking area in which the UE is currently located (the tracking area synchronizes the configuration to the first base station in the energy-saving state). The cell in the tracking area includes a current serving cell, or a recently connected serving cell, or any serving cell in the current tracking area.

Optionally, in a case that the energy-saving wakeup signal includes one preamble sequence, the preamble sequence meets at least one of the following:
an index of the preamble sequence corresponds to the first information;
a first preamble sequence group in which an index of the preamble sequence is located corresponds to the first information, where the first preamble sequence group is one of a plurality of preamble sequence groups formed by grouping indexes of all available preamble sequences in a cell in which the terminal is located;
a logical root sequence of the preamble sequence corresponds to the first information;
the preamble sequence corresponds to the first information; or
a second preamble sequence group in which the preamble sequence is located corresponds to the first information, where the second preamble sequence group is one of a plurality of preamble sequence groups formed by grouping all available preamble sequences in a cell in which the terminal is located.

Optionally, when the energy-saving wakeup signal includes a single preamble sequence, the first information carried in the energy-saving wakeup signal is implicitly carried by the single preamble sequence.

For example, a plurality of preambles in a cell may be classified into a plurality of groups, and each group represents that different information is carried.

Optionally, a grouping rule may be any one of the following:
(1) Grouping based on indexes of preambles. For example, preambles 0 to 11 are a group, preambles 12 to 23 are a group, and so on.
(2) Grouping based on a logical root sequence. In other words, preambles generated based on a same root sequence are a group.
(3) Autonomous configuration by the network side. For example, preambles 1, 13, 24, and 36 are a group.

Optionally, when the energy-saving wakeup signal includes a single preamble sequence, assuming that there are 64 available preambles in a cell, the 64 preambles may be classified into a plurality of groups, where each group represents that different information is carried. For example, the 64 preambles are classified into three groups, where group 1 represents that a preamble in this group does not carry redundant information; group 2 represents that a preamble in this group carries specific information, such as specific power information, specific common signal cycle information, and specific beam information; group 3 and group 2 have similar functions, but differ in that indicated values are different.

Optionally, a quantity of available preambles in a cell is not only limited to 64, and may also be 128, or any other feasible value, which is not limited in this embodiment of this application.

Optionally, after the first base station receives the energy-saving wakeup signal, specific content of the first information indicated by the energy-saving wakeup signal may be determined based on an index of the single preamble sequence or the single preamble sequence and based on a preset mapping relationship between each group of preamble sequences and the first information.

For example, the index of the preamble sequence corresponds to the first information.

For example, the first preamble sequence group in which the index of the preamble sequence is located corresponds to the first information, where the first preamble sequence group is one of the plurality of preamble sequence groups formed by grouping the indexes of all the available preamble sequences in the cell in which the terminal is located.

For example, indexes 1 to 8 of preamble sequences correspond to terminal identity a1 of a terminal and/or transmit power b1 of the terminal, indexes 9 to 16 of preamble sequences correspond to terminal identity a2 of a terminal and/or transmit power b2 of the terminal, indexes 17 to 24 of preamble sequences correspond to terminal identity a3 of a terminal and/or transmit power b3 of the terminal, and so on. In this case, the terminal uses a preamble sequence corresponding to any one of indexes 19 to 24 in a case that first information to be indicated includes terminal identity a3 of the terminal and/or transmit power b3 of the terminal.

For example, indexes 1 to 8 of preamble sequences correspond to terminal identity a1 of a terminal and/or beam information c1 determined by the terminal, indexes 9 to 16 of preamble sequences correspond to terminal identity a2 of a terminal and/or beam information c2 determined by the terminal, indexes 17 to 24 of preamble sequences correspond to terminal identity a3 of a terminal and/or beam information c3 determined by the terminal, indexes 25 to 32 of preamble sequences correspond to priority d1 of data of a terminal, indexes 33 to 40 of preamble sequences correspond to priority d2 of data of a terminal, indexes 41 to 48 of preamble sequences correspond to priority d3 of data of a terminal, and so on. In this case, the terminal uses a preamble sequence corresponding to any one of indexes 9 to 16 in a case that first information to be indicated includes terminal identity a2 of the terminal and/or beam information c2 determined by the terminal. The terminal uses a preamble sequence corresponding to any one of indexes 25 to 32 in a case that first information to be indicated includes priority d1 of data of the terminal.

For example, the logical root sequence of the preamble sequence corresponds to the first information.

For example, logical root sequence A1 of a preamble sequence corresponds to terminal identity a1 of a terminal and/or transmit power b1 of the terminal, logical root sequence A2 of a preamble sequence corresponds to terminal identity a2 of a terminal and/or transmit power b2 of the terminal, logical root sequence A3 of a preamble sequence corresponds to terminal identity a3 of a terminal and/or transmit power b3 of the terminal, and so on. In this case, the terminal uses the preamble sequence of logical root sequence A3 in a case that first information to be indicated includes terminal identity a3 of the terminal and/or transmit power b3 of the terminal.

For example, logical root sequence A1 of a preamble sequence corresponds to identity e1 of a tracking area in which a terminal is located and/or transmit power b1 of the terminal, logical root sequence A2 of a preamble sequence corresponds to identity e2 of a tracking area in which a terminal is located and/or transmit power b2 of the terminal, logical root sequence A3 of a preamble sequence corresponds to identity e3 of a tracking area in which a terminal is located and/or transmit power b3 of the terminal, and so on. In this case, the terminal uses the preamble sequence of logical root sequence A3 in a case that first information to be indicated includes identity e3 of the tracking area in which the terminal is located and/or transmit power b3 of the terminal.

For example, logical root sequence A1 of a preamble sequence corresponds to beam information c1 determined by a terminal, logical root sequence A2 of a preamble sequence corresponds to beam information c2 determined by a terminal, and logical root sequence A3 of a preamble sequence corresponds to beam information c3 determined by a terminal, logical root sequence A4 of a preamble sequence corresponds to priority d1 of data of a terminal, logical root sequence A5 of a preamble sequence corresponds to priority d2 of data of a terminal, logical root sequence A6 of a preamble sequence corresponds to priority d3 of data of a terminal, and so on. In this case, the terminal uses the preamble sequence of logical root sequence A2 in a case that first information to be indicated includes beam information c2 determined by the terminal. The terminal uses the preamble sequence of logical root sequence A6 in a case that first information to be indicated includes priority d3 of data of the terminal.

For example, the preamble sequence corresponds to the first information.

For example, the second preamble sequence group in which the preamble sequence is located corresponds to the first information, where the second preamble sequence group is one of the plurality of preamble sequence groups formed by grouping all the available preamble sequences in the cell in which the terminal is located.

For example, preamble sequences B1 to B8 correspond to beam configuration information f1 determined by a terminal and/or transmit power b1 of the terminal, preamble sequences C1 to C8 correspond to beam configuration information f2 determined by a terminal and/or transmit power b2 of the terminal, preamble sequences D1 to D8 correspond to beam configuration information f3 determined by a terminal and/or transmit power b3 of the terminal, and so on. In this case, the terminal uses any one of preamble sequences D1 to D8 in a case that first information to be indicated includes beam configuration information f3 determined by the terminal and/or transmit power b3 of the terminal.

For example, preamble sequences B1 to B8 correspond to terminal identity a1 of a terminal and/or transmit power b1 of the terminal, preamble sequences C1 to C8 correspond to terminal identity a2 of a terminal and/or transmit power b2 of the terminal, preamble sequences D1 to D8 correspond to terminal identity a3 of a terminal and/or transmit power b3 of the terminal, and so on. In this case, the terminal uses any one of preamble sequences D1 to D8 in a case that first information to be indicated includes terminal identity a3 of the terminal and/or transmit power b3 of the terminal.

It should be noted that a single preamble sequence may indicate one or more of the terminal identity of the terminal, the base station identity of the first base station, the transmit power of the terminal, the cycle of the common signal expected by the terminal, the location information of the terminal, the priority or the size of the data of the terminal, the beam information or beam configuration information determined by the terminal, the identity of the tracking area in which the terminal is located, and the preset information. The foregoing examples are used only as examples to help understanding, and are not used as limitations on this application.

Optionally, in a case that the energy-saving wakeup signal includes a preamble sequence and a payload, the first information is carried by the payload.

Optionally, a solution in a case that the energy-saving wakeup signal includes a preamble sequence and a payload is similar to a MsgA solution in a 2-step RACH. In other words, a PUSCH is sent again after the preamble sequence, and bits information (the first information) is carried by this PUSCH.

Optionally, a time-frequency domain location of the PUSCH may be configured for the UE by using the tracking area in which the UE is currently located, and synchronized to the first base station in the energy-saving state. This configuration may be a separate configuration, or is the same as the configuration of MsgA in a serving cell by default.

Optionally, before the terminal sends the energy-saving wakeup signal, the method further includes:
the terminal determines a transmission configuration of the energy-saving wakeup signal based on transmission configuration indicator information of a cell in the tracking area (tracking area) in which the terminal is located, where
the cell in the tracking area (tracking area) in which the terminal is located includes at least one of the following:
   a current serving cell of the terminal (corresponding to the second base station);
   a serving cell to which the terminal is recently connected; and any serving cell in the current tracking area (tracking area) of the terminal.

Optionally, the configuration of the energy-saving signal sent by the UE is configured by the cell in the tracking area (tracking area) in which the UE is located.

Optionally, the cell in the tracking area includes a current serving cell of the terminal, or a serving cell to which the terminal is recently connected, or any serving cell in the current tracking area of the terminal.

Optionally, the transmission configuration may be a separate configuration, or is the same as some configurations in a serving cell in the tracking area by default.

Optionally, the transmission configuration of the energy-saving wakeup signal includes at least one of the following:
a time-frequency location of the energy-saving wakeup signal; and
a quantity of the preamble sequence(s).

Optionally, the transmission configuration of the energy-saving wakeup signal may include any one or more of the following:
a time-frequency location of the energy-saving wakeup signal; and
a quantity of preamble(s).

Optionally, the quantity of the preamble sequence(s) may be a quantity of preamble(s), for example, may correspond to one or more preambles included in the energy-saving wakeup signal.

Optionally, when the transmission configuration of the energy-saving wakeup signal includes a plurality of preambles, the first information may be indicated by using the plurality of preambles, or indicated by using only a single preamble sequence, or indicated by using a combination of a preamble and a payload.

Optionally, when the transmission configuration of the energy-saving wakeup signal includes one preamble, only a single preamble sequence may be used for indicating, or a combination of the preamble and a payload may be used for indicating.

Optionally, the base station identity of the first base station corresponds to the index of the preamble sequence.

Optionally, in a case that the first information includes the base station identity of the first base station, the base station identity of the first base station may be associated with the index of the preamble sequence.

Optionally, the method further includes:
the terminal measures an SSB to obtain an SSB measurement result; and
the terminal determines, based on the SSB measurement result, that the first base station is a wakeup target.

Optionally, the terminal may measure the SSB to obtain the SSB measurement result, and the first base station indicated by the base station identity corresponding to the SSB measurement result needs to be woken up.

Optionally, that a terminal sends an energy-saving wakeup signal includes: the terminal determines, based on the base station identity of the first base station, the index of the preamble sequence corresponding to the base station identity; and
the terminal sends the energy-saving wakeup signal to the first base station based on the base station identity of the first base station and the index of the preamble sequence.

Optionally, after determining the base station identity of the first base station that needs to be woken up, the terminal may determine, based on an association relationship between the base station identity of the first base station and the index of the preamble sequence, the index of the preamble sequence that needs to be used.

Optionally, after determining the index of the preamble sequence that needs to be used, the terminal may generate and send the energy-saving wakeup signal.

Optionally, that a terminal sends an energy-saving wakeup signal includes:
the terminal sends the SSB measurement result to the second base station, where the SSB measurement result includes the base station identity of the first base station.

Optionally, after obtaining the SSB measurement result, the terminal may directly send the SSB measurement result to the second base station, where the SSB measurement result includes the base station identity of the first base station.

Optionally, when the first information carried in the energy-saving wakeup signal includes the base station identity of the first base station, the following steps may be performed to confirm the first base station that needs to be woken up in the energy-saving state.

Step 1: Establish a mapping relationship between the ID of the first base station in the energy-saving state and a RACH resource, where the mapping relationship may be in accordance with the following rule:
the network side classifies preamble indexes into N groups, where each group corresponds to one base station identity, which may be, for example, a cell ID; or
the network side classifies preamble indexes into N groups, and uses Cell ID mod N to determine a group of preambles to be selected.

Step 2: The UE measures an SSB to obtain an ID of a cell that the UE wants to wake up. Therefore, an index of a preamble that may be sent is obtained.

Step 3: For a terminal in an idle state (for idle UE), the UE sends the preamble, and the first base station in the energy-saving state 'wakes up' after receiving the preamble. Alternatively, after receiving the preamble, the serving cell wakes up the first base station in the energy-saving state via the network side (the higher layer, such as the Xn interface).

Step 3: For a terminal in a connected state (for connected UE), the UE directly reports an SSB measurement result (the base station identity, such as the cell ID) to the serving cell, and wakes up the first base station in the energy-saving state via the serving cell.

In this embodiment of this application, the wakeup signal including the preamble sequence carries the first information, to indicate the energy-saving processing to be performed after the first base station is woken up and assist the first base station in energy saving.

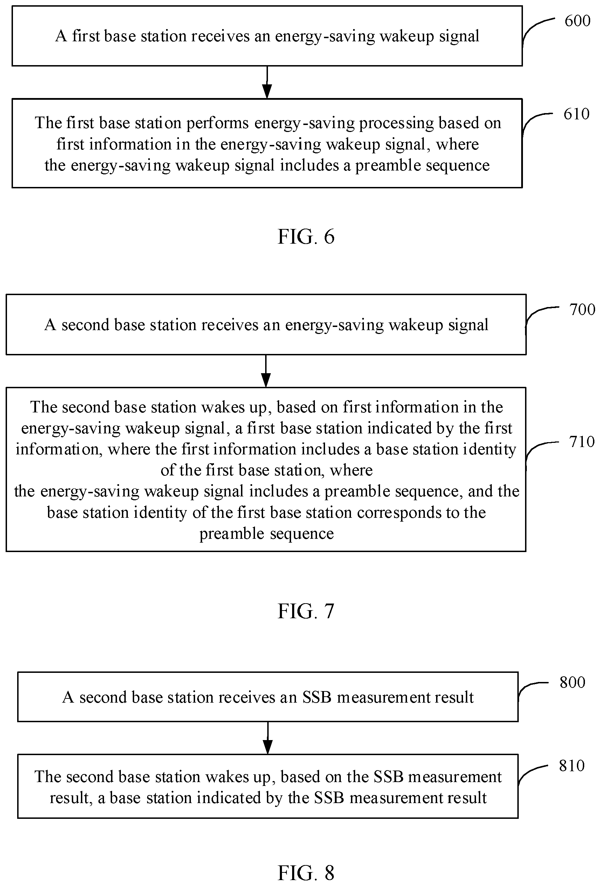

FIG. 6 is a second schematic flowchart of an energy-saving wakeup method according to an embodiment of this application. As shown in FIG. 6, the method includes the following steps.

Step 600: A first base station receives an energy-saving wakeup signal.

Step 610: The first base station performs energy-saving processing based on first information in the energy-saving wakeup signal, where
the energy-saving wakeup signal includes a preamble sequence.

Optionally, the first base station may be a base station to be woken up in an energy-saving state.

Optionally, the first base station may be a wakeup target of a terminal.

Optionally, the energy-saving wakeup signal may be referred to as a WUS, a UE WUS, or a WUS signal.

Optionally, in a case that the UE WUS is a preamble, because the preamble cannot carry bits to indicate information, in this embodiment of this application, the terminal may send the energy-saving wakeup signal including the preamble sequence, where the energy-saving wakeup signal is used to carry the first information. The first base station may receive the energy-saving wakeup signal, and perform energy-saving processing based on the first information in the energy-saving wakeup signal.

Optionally, in this embodiment of this application, the UE sends the energy-saving wakeup signal, where the first information carried in the energy-saving signal is used to assist the first base station in energy-saving processing.

In this embodiment of this application, the wakeup signal including the preamble sequence carries the first information, to indicate the energy-saving processing to be performed after the first base station is woken up and assist the first base station in energy saving.

Optionally, that the first base station performs energy-saving processing based on first information in the energy-saving wakeup signal includes:
the first base station determines transmit power of the first base station based on the first information, where
the first information includes at least one of the following:
   transmit power of the terminal; and
   location information of the terminal.

Optionally, the first base station may calculate and determine its own transmit power based on transmit power of the UE and/or location information of the UE.

Optionally, for the first base station, the first base station in the energy-saving state may estimate a UL WUS path loss based on transmit power of the terminal and measurement of reference signal received power RSRP, and may properly adjust downlink power to serve the UE.

Optionally, the first base station in the energy-saving state may determine, based on the location information of the terminal, whether it is necessary to 'wake up'.

Optionally, that the first base station performs energy-saving processing based on first information in the energy-saving wakeup signal includes:
the first base station determines a cycle of a common signal of the first base station based on the first information, where
the first information includes at least one of the following:
   a cycle of a common signal expected by the terminal.

Optionally, the first base station may configure its own cycle of the common signal based on the cycle of the common signal expected by the terminal in the first information.

Optionally, the first information may include the cycle of the common signal expected by the terminal, that is, a cycle of the common signal desired by the UE.

Optionally, the first base station in the energy-saving state may use a longer SSB cycle in a case that functions such as initial access, downlink synchronization, and interference measurement are implemented by an SSB signal. If the UE detects downlink out-of-synchronization or inaccurate measurement, the terminal may notify the first base station of the desired SSB cycle by using the WUS.

Optionally, that the first base station performs energy-saving processing based on first information in the energy-saving wakeup signal includes:
the first base station determines, based on the first information, whether to turn on all or part of hardware in an off state and/or whether to turn on all or part of bandwidth resources in an off state, where
the first information includes at least one of the following:
   a priority or a size of data of the terminal; and
   beam information or beam configuration information determined by the terminal.

Optionally, the first base station may determine, based on a priority or a size of data of the UE, or a beam or a beam configuration preferred by the UE, whether to turn on all or part of hardware, bandwidth resources, and the like that are turned off.

Optionally, in a case that a priority of data currently transmitted or received by the UE is high, if a current status cannot meet requirements of data transmission or reception of the UE, the first base station in the energy-saving state may 'wake up'.

Optionally, that the first base station performs energy-saving processing based on first information in the energy-saving wakeup signal includes:
the first base station determines, based on the first information, that a wakeup target of the energy-saving wakeup signal is the first base station, and wakes up from the energy-saving state or switches from a deep sleep state to a light sleep state, where
the first information includes at least one of the following:
   a terminal identity of the terminal;
   a base station identity of the first base station;
   an identity of a tracking area in which the terminal is located; or
   preset information, where the preset information is used to demodulate the energy-saving wakeup signal.

Optionally, the first information may include a terminal identity (UE ID) of the terminal,
for example, a globally unique temporary UE identity (Globally Unique Temporary UE Identity, GUTI), a temporary mobile subscriber identity (Temporary Mobile Subscriber Identity, TMSI), or other similar terminal identities that can uniquely identify the terminal.

Optionally, a second base station (which may be, for example, a serving cell (Serving cell) of the terminal) may synchronize the following to the first base station in the energy-saving state: The UE will send or is sending the WUS signal; and notify the first base station of the UE ID of the terminal. After blind detection, the first base station in the energy-saving state may obtain the UE ID through parsing before starting to 'wake up'.

Optionally, the second base station may be a serving base station of the terminal.

Optionally, the first information may include a base station identity (which may be, for example, a cell ID) of the first base station.

Optionally, for the first base station, in a case that there are a plurality of first base stations in the energy-saving state, only the first base station that detects a cell having the same ID information 'wakes up'.

Alternatively, the second base station wakes up the first base station in the energy-saving state via a network side (a higher layer, such as an Xn interface) based on the base station identity of the first base station.

Optionally, the first information may include preset information, where the preset information is used to demodulate the energy-saving wakeup signal.

Optionally, the preset information (which may also be referred to as a designated signal or a special signal) is a signal predefined in a protocol and dedicated to WUS demodulation. The first base station in the energy-saving state may wake up after receiving and demodulating the content.

Optionally, the first information may include an identity of a tracking area in which the terminal is located, that is, a tracking area ID.

Optionally, in a case that there are a plurality of first base stations in the energy-saving state, only the first base station that detects a cell having the same tracking area ID information 'wakes up'.

Optionally, the first base station may determine, based on ID information or designated information, whether the signal is a signal sent to the first base station, to determine whether to wake up completely from the energy-saving state; or switch from deep sleep to light sleep, where the ID information includes a UE ID, a cell ID, a tracking area ID, or the like.

Optionally, information carried in the WUS may include any one or more of the following:
(1) A terminal identity (UE ID) of the terminal,
   for example, a globally unique temporary UE identity (Globally Unique Temporary UE Identity, GUTI), a temporary mobile subscriber identity (Temporary Mobile Subscriber Identity, TMSI), or other similar terminal identities that can uniquely identify the terminal.

Optionally, a second base station (which may be, for example, a serving cell (Serving cell) of the terminal) may synchronize the following to the first base station in the energy-saving state: The UE will send or is sending the WUS signal; and notify the first base station of the UE ID of the terminal. After blind detection, the first base station in the energy-saving state may obtain the UE ID through parsing before starting to 'wake up'.

(2) A base station identity (which may be, for example, a cell ID) of the first base station.

Optionally, for the first base station, in a case that there are a plurality of first base stations in the energy-saving state, only the first base station that detects a cell having the same ID information 'wakes up'.

Alternatively, the second base station wakes up the first base station in the energy-saving state via a network side (a higher layer, such as an Xn interface) based on the base station identity (which may be, for example, a cell ID) of the first base station.

(3) Transmit power of the terminal.

Optionally, for the first base station, the first base station in the energy-saving state may estimate a UL WUS path loss based on transmit power of the terminal and measurement of reference signal received power RSRP, and may properly adjust downlink power to serve the UE.

(4) A cycle of a common signal expected by the terminal, that is, a cycle of the common signal desired by the UE.

Optionally, the first base station in the energy-saving state may use a longer SSB cycle in a case that functions such as initial access, downlink synchronization, and interference measurement are implemented by an SSB signal. If the UE detects downlink out-of-synchronization or inaccurate measurement, the terminal may notify the first base station of the desired SSB cycle by using the WUS.

(5) Location information of the terminal.

Optionally, the first base station in the energy-saving state may determine, based on the location information of the terminal, whether it is necessary to 'wake up'.

(6) A priority or a size of data of the terminal.

Optionally, in a case that a priority of data currently transmitted or received by the UE is high, if a current status cannot meet requirements of data transmission or reception of the UE, the first base station in the energy-saving state may 'wake up'.

(7) Beam information or beam configuration information determined by the terminal.

Optionally, if the first base station in the energy-saving state still sends SSB information, the UE may obtain a preferred beam of the first base station in the energy-saving state when performing neighboring cell measurement in a serving cell. The terminal may notify the first base station in the energy-saving state by using the WUS. The first base station in the energy-saving state may selectively send a beam (selectively turn on some hardware devices, such as a PA) based on the information.

(8) Preset information, where the preset information is used to demodulate the energy-saving wakeup signal.

Optionally, the preset information (which may also be referred to as a designated signal or a special signal) is a signal predefined in a protocol and dedicated to WUS demodulation. The first base station in the energy-saving state may wake up after receiving and demodulating the content.

(9) An identity of a tracking area in which the terminal is located, that is, a tracking area ID.

Optionally, in a case that there are a plurality of first base stations in the energy-saving state, only the first base station that detects a cell having the same tracking area ID information 'wakes up'.

Optionally, the base station identity of the first base station corresponds to the preamble sequence.

Optionally, in a case that the first information includes the base station identity of the first base station, the base station identity of the first base station may be associated with an index of the preamble sequence.

Optionally, when the first information carried in the energy-saving wakeup signal includes the base station identity (which may be a cell ID) of the first base station, the following steps may be performed to confirm the first base station that needs to be woken up in the energy-saving state.

Step 1: Establish a mapping relationship between the ID of the first base station in the energy-saving state and a RACH resource, where the mapping relationship may be in accordance with the following rule:
the network side classifies preamble indexes into N groups, where each group corresponds to one base station identity, which may be, for example, a cell ID; or
the network side classifies preamble indexes into N groups, and uses Cell ID mod N to determine a group of preambles to be selected.

Step 2: The UE measures an SSB to obtain an ID of a cell that the UE wants to wake up. Therefore, an index of a preamble that may be sent is obtained.

Step 3: For a terminal in an idle state (for idle UE), the UE sends the preamble, and the first base station in the energy-saving state 'wakes up' after receiving the preamble.

In this embodiment of this application, the wakeup signal including the preamble sequence carries the first information, to indicate the energy-saving processing to be performed after the first base station is woken up and assist the first base station in energy saving.

FIG. 7 is a third schematic flowchart of an energy-saving wakeup method according to an embodiment of this application. As shown in FIG. 7, the method includes the following steps.

Step 700: A second base station receives an energy-saving wakeup signal.

Step 710: The second base station wakes up, based on first information in the energy-saving wakeup signal, a first base station indicated by the first information, where the first information includes a base station identity of the first base station, where
the energy-saving wakeup signal includes a preamble sequence, and the base station identity of the first base station corresponds to the preamble sequence.

Optionally, the first base station may be a base station to be woken up in an energy-saving state.

Optionally, the first base station may be a wakeup target of a terminal.

Optionally, the second base station may be a serving base station of the terminal.

Optionally, the energy-saving wakeup signal may be referred to as a WUS, a UE WUS, or a WUS signal.

Optionally, in a case that the UE WUS is a preamble, because the preamble cannot carry bits to indicate information, in this embodiment of this application, the terminal may send the energy-saving wakeup signal including the preamble sequence, where the energy-saving wakeup signal is used to carry the first information to indicate energy-saving processing to be performed after the first base station is woken up. After receiving the energy-saving wakeup signal, the second base station may wake up, based on the first information in the energy-saving wakeup signal, the first base station indicated by the first information, where the first information includes the base station identity of the first base station.

Optionally, in this embodiment of this application, the UE sends the energy-saving wakeup signal, where the first information carried in the energy-saving signal is used to assist the first base station in energy-saving processing.

Optionally, in a case that the first information includes the base station identity of the first base station, the base station identity of the first base station may be associated with an index of the preamble sequence.

Optionally, when the first information carried in the energy-saving wakeup signal includes the base station identity (which may be, for example, a cell ID) of the first base station, the following steps may be performed to confirm the first base station that needs to be woken up in the energy-saving state.

Step 1: Establish a mapping relationship between the base station identity of the first base station in the energy-saving state and a RACH resource, where the mapping relationship may be in accordance with the following rule:
a network side classifies preamble indexes into N groups, where each group corresponds to one base station identity, which may be, for example, a cell ID; or
a network side classifies preamble indexes into N groups, and uses Cell ID mod N to determine a group of preambles to be selected.

Step 2: The UE measures an SSB to obtain an ID of a cell that the UE wants to wake up. Therefore, an index of a preamble that may be sent is obtained.

Step 3: For a terminal in an idle state (for idle UE), after receiving the preamble, a serving cell wakes up the first base station in the energy-saving state via the network side (a higher layer, such as an Xn interface).

In this embodiment of this application, the wakeup signal including the preamble sequence carries the first information, to indicate the energy-saving processing to be performed after the first base station is woken up and assist the first base station in energy saving.

FIG. 8 is a fourth schematic flowchart of an energy-saving wakeup method according to an embodiment of this application. As shown in FIG. 8, the method includes the following steps.

Step 800: A second base station receives an SSB measurement result.

Step 810: The second base station wakes up, based on the SSB measurement result, a first base station indicated by the SSB measurement result.

Optionally, the first base station may be a base station to be woken up in an energy-saving state.

Optionally, the first base station may be a wakeup target of a terminal.

Optionally, the second base station may be a serving base station of the terminal.

Optionally, an energy-saving wakeup signal may be referred to as a WUS, a UE WUS, or a WUS signal.

Optionally, in a case that the UE WUS is a preamble, because the preamble cannot carry bits to indicate information, in this embodiment of this application, the terminal may send the energy-saving wakeup signal including a preamble sequence, where the energy-saving wakeup signal is used to carry first information to indicate energy-saving processing to be performed after the first base station is woken up. After receiving the energy-saving wakeup signal, the second base station may wake up, based on the first information in the energy-saving wakeup signal, the first base station indicated by the first information, where the first information includes a base station identity of the first base station.

Optionally, in this embodiment of this application, the UE sends the energy-saving wakeup signal, where the first information carried in the energy-saving signal is used to assist the first base station in energy-saving processing.

Optionally, in a case that the first information includes the base station identity of the first base station, the base station identity of the first base station may be associated with an index of the preamble sequence.

Optionally, when the first information carried in the energy-saving wakeup signal includes the base station identity (which may be, for example, a cell ID) of the first base station, the following steps may be performed to confirm the first base station that needs to be woken up in the energy-saving state.

Step 1: Establish a mapping relationship between the ID of the first base station in the energy-saving state and a RACH resource, where the mapping relationship may be in accordance with the following rule:
a network side classifies preamble indexes into N groups, where each group corresponds to one base station identity, which may be, for example, a cell ID; or
a network side classifies preamble indexes into N groups, and uses Cell ID mod N to determine a group of preambles to be selected.

Step 2: The UE measures an SSB to obtain an ID of a cell that the UE wants to wake up. Therefore, an index of a preamble that may be sent is obtained.

Step 3: For a terminal in a connected state (for connected UE), the UE directly reports an SSB measurement result (a cell ID) to a serving cell, and wakes up the first base station in the energy-saving state via the serving cell.

In this embodiment of this application, the wakeup signal including the preamble sequence carries the first information, to indicate the energy-saving processing to be performed after the first base station is woken up and assist the first base station in energy saving.

The energy-saving wakeup method provided in the embodiments of this application may be performed by an energy-saving wakeup apparatus. An energy-saving wakeup apparatus provided in the embodiments of this application is described by assuming that the energy-saving wakeup method is performed by the energy-saving wakeup apparatus in the embodiments of this application.

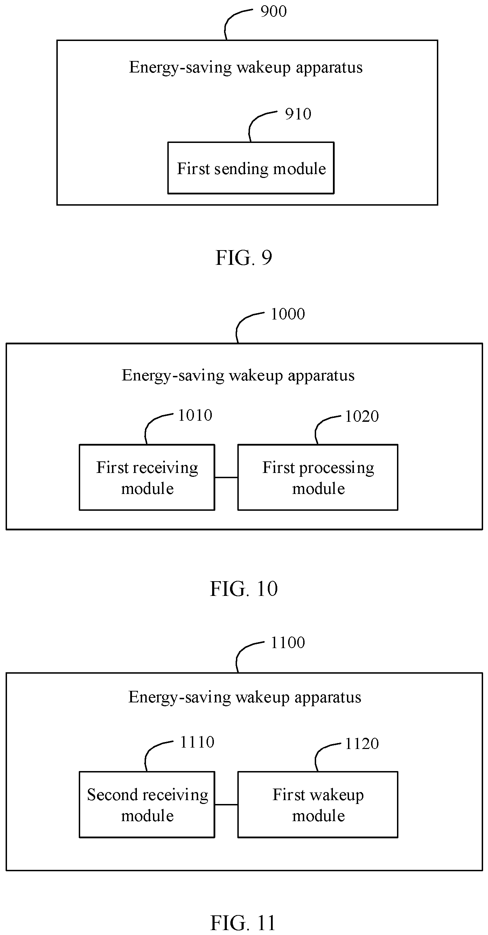

FIG. 9 is a first schematic diagram of a structure of an energy-saving wakeup apparatus according to an embodiment of this application. As shown in FIG. 9, the apparatus 900 includes a first sending module 910.

The first sending module 910 is configured to send an energy-saving wakeup signal, where
the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

In this embodiment of this application, the wakeup signal including the preamble sequence carries the first information, to indicate the energy-saving processing to be performed after the first base station is woken up and assist the first base station in energy saving.

Optionally, the first information includes at least one of the following:
a terminal identity of a terminal;
a base station identity of the first base station;
transmit power of the terminal;
a cycle of a common signal expected by the terminal;
location information of the terminal;
a priority or a size of data of the terminal;
beam information or beam configuration information determined by the terminal;
an identity of a tracking area in which the terminal is located; or
preset information, where the preset information is used to demodulate the energy-saving wakeup signal.

Optionally, the energy-saving wakeup signal includes one or more preamble sequences, or the energy-saving wakeup signal includes a preamble sequence and a payload.

Optionally, in a case that the energy-saving wakeup signal includes a plurality of preamble sequences, the plurality of preamble sequences jointly carry the first information, where each of the plurality of preamble sequences carries 1-bit content of the first information.

Optionally, in a case that the energy-saving wakeup signal includes one preamble sequence, the preamble sequence meets at least one of the following:
an index of the preamble sequence corresponds to the first information;
a first preamble sequence group in which an index of the preamble sequence is located corresponds to the first information, where the first preamble sequence group is one of a plurality of preamble sequence groups formed by grouping indexes of all available preamble sequences in a cell in which the terminal is located;
a logical root sequence of the preamble sequence corresponds to the first information;
the preamble sequence corresponds to the first information; or
a second preamble sequence group in which the preamble sequence is located corresponds to the first information, where the second preamble sequence group is one of a plurality of preamble sequence groups formed by grouping all available preamble sequences in a cell in which the terminal is located.

Optionally, in a case that the energy-saving wakeup signal includes a preamble sequence and a payload, the first information is carried by the payload.

Optionally, the apparatus further includes:
a first determining module, configured to determine, before the energy-saving wakeup signal is sent, a transmission configuration of the energy-saving wakeup signal based on transmission configuration indicator information of a cell in the tracking area (tracking area) in which the terminal is located, where
the cell in the tracking area (tracking area) in which the terminal is located includes at least one of the following:
   a current serving cell of the terminal;
   a serving cell to which the terminal is recently connected; and
   any serving cell in the current tracking area (tracking area) of the terminal.

Optionally, the transmission configuration of the energy-saving wakeup signal includes at least one of the following:
a time-frequency location of the energy-saving wakeup signal; and
a quantity of the preamble sequence(s).

Optionally, the base station identity of the first base station corresponds to the index of the preamble sequence.

Optionally, the apparatus further includes:
a first measurement module, configured to measure an SSB to obtain an SSB measurement result; and
a second determining module, configured to determine, based on the SSB measurement result, that the first base station is a wakeup target.

Optionally, the first sending module is specifically configured to:
determine, based on the base station identity of the first base station, the index of the preamble sequence corresponding to the base station identity; and
send the energy-saving wakeup signal to the first base station based on the base station identity of the first base station and the index of the preamble sequence.

Optionally, the first sending module is specifically configured to:
send the SSB measurement result to a second base station, where the SSB measurement result includes the base station identity of the first base station.

In this embodiment of this application, the wakeup signal including the preamble sequence carries the first information, to indicate the energy-saving processing to be performed after the first base station is woken up and assist the first base station in energy saving.

The energy-saving wakeup apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The energy-saving wakeup apparatus provided in this embodiment of this application can implement each process implemented in the method embodiment in FIG. 5, with the same technical effect achieved. To avoid repetition, details are not described herein again.

FIG. 10 is a second schematic diagram of a structure of an energy-saving wakeup apparatus according to an embodiment of this application. As shown in FIG. 10, the apparatus 1000 includes a first receiving module 1010 and a first processing module 1020.

The first receiving module 1010 is configured to receive an energy-saving wakeup signal.

The first processing module 1020 is configured to perform energy-saving processing based on first information in the energy-saving wakeup signal, where
the energy-saving wakeup signal includes a preamble sequence.

In this embodiment of this application, the wakeup signal including the preamble sequence carries the first information, to indicate the energy-saving processing to be performed after the first base station is woken up and assist the first base station in energy saving.

Optionally, the first processing module is specifically configured to:
determine transmit power of a first base station based on the first information, where
the first information includes at least one of the following:
   transmit power of a terminal; and
   location information of the terminal.

Optionally, the first processing module is specifically configured to:
determine a cycle of a common signal of a first base station based on the first information, where
the first information includes:
   a cycle of a common signal expected by a terminal.

Optionally, the first processing module is specifically configured to:
determine, based on the first information, whether to turn on all or part of hardware in an off state and/or whether to turn on all or part of bandwidth resources in an off state, where
the first information includes at least one of the following:
   a priority or a size of data of a terminal; and
   beam information or beam configuration information determined by the terminal.

Optionally, the first processing module is specifically configured to:
determine, based on the first information, that a wakeup target of the energy-saving wakeup signal is a first base station, and wake up from an energy-saving state or switch from a deep sleep state to a light sleep state, where
the first information includes at least one of the following:
   a terminal identity of a terminal;
   a base station identity of the first base station;
   an identity of a tracking area in which the terminal is located; or
   preset information, where the preset information is used to demodulate the energy-saving wakeup signal.

Optionally, the base station identity of the first base station corresponds to the preamble sequence.

In this embodiment of this application, the wakeup signal including the preamble sequence carries the first information, to indicate the energy-saving processing to be performed after the first base station is woken up and assist the first base station in energy saving.

The energy-saving wakeup apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The energy-saving wakeup apparatus provided in this embodiment of this application can implement each process implemented in the method embodiment in FIG. 6, with the same technical effect achieved. To avoid repetition, details are not described herein again.

FIG. 11 is a third schematic diagram of a structure of an energy-saving wakeup apparatus according to an embodiment of this application. As shown in FIG. 11, the apparatus 1100 includes a second receiving module 1110 and a first wakeup module 1120.

The second receiving module 1110 is configured to receive an energy-saving wakeup signal.

The first wakeup module 1120 is configured to wake up, based on first information in the energy-saving wakeup signal, a first base station indicated by the first information, where the first information includes a base station identity of the first base station, where
the energy-saving wakeup signal includes a preamble sequence, and the base station identity of the first base station corresponds to the preamble sequence.

In this embodiment of this application, the wakeup signal including the preamble sequence carries the first information, to indicate the energy-saving processing to be performed after the first base station is woken up and assist the first base station in energy saving.

The energy-saving wakeup apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The energy-saving wakeup apparatus provided in this embodiment of this application can implement each process implemented in the method embodiment in FIG. 7, with the same technical effect achieved. To avoid repetition, details are not described herein again.

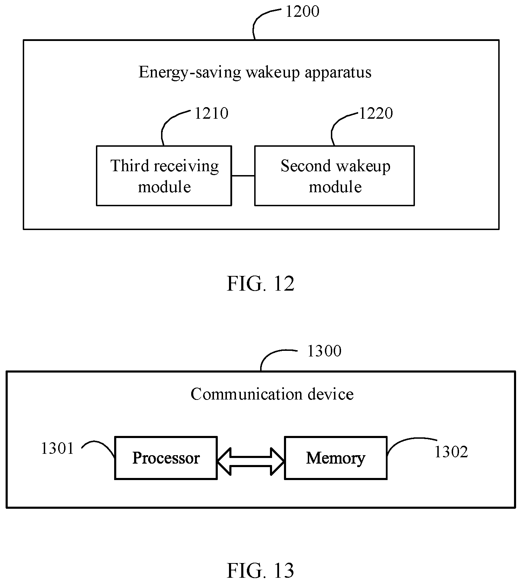

FIG. 12 is a fourth schematic diagram of a structure of an energy-saving wakeup apparatus according to an embodiment of this application. As shown in FIG. 12, the apparatus 1200 includes a third receiving module 1210 and a second wakeup module 1220.

The third receiving module 1210 is configured to receive an SSB measurement result.

The second wakeup module 1220 is configured to wake up, based on the SSB measurement result, a first base station indicated by the SSB measurement result.

In this embodiment of this application, a wakeup signal including a preamble sequence carries first information, to indicate energy-saving processing to be performed after the first base station is woken up and assist the first base station in energy saving.

The energy-saving wakeup apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The energy-saving wakeup apparatus provided in this embodiment of this application can implement each process implemented in the method embodiment in FIG. 8, with the same technical effect achieved. To avoid repetition, details are not described herein again.

Optionally, FIG. 13 is a schematic diagram of a structure of a communication device according to an embodiment of this application. As shown in FIG. 13, an embodiment of this application further provides a communication device 1300, including a processor 1301 and a memory 1302. The memory 1302 stores a program or instructions executable on the processor 1301. For example, when the communication device 1300 is a terminal, and the program or instructions are executed by the processor 1301, the steps of the foregoing embodiment of the energy-saving wakeup method corresponding to the terminal are implemented, with the same technical effect achieved. When the communication device 1300 is a first base station, and the program or instructions are executed by the processor 1301, the steps of the foregoing embodiment of the energy-saving wakeup method corresponding to the first base station are implemented, with the same technical effect achieved. When the communication device 1300 is a second base station, and the program or instructions are executed by the processor 1301, the steps of the foregoing embodiment of the energy-saving wakeup method corresponding to the second base station are implemented, with the same technical effect achieved. To avoid repetition, details are not described herein again.

An embodiment of this application further provides a terminal, including a processor and a communication interface. The communication interface is configured to:
send an energy-saving wakeup signal, where
the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

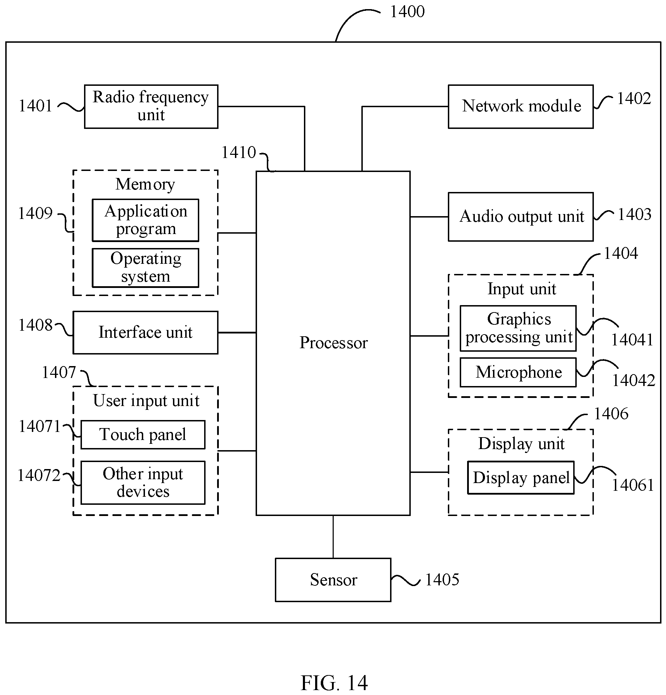

The terminal embodiment corresponds to the foregoing terminal-side method embodiment, and each implementation process and implementation of the foregoing method embodiment can be applied to the terminal embodiment, with the same technical effect achieved. Specifically, FIG. 14 is a schematic diagram of a hardware structure of a terminal for implementing an embodiment of this application.

The terminal 1400 includes but is not limited to at least some components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the terminal 1400 may further include a power supply (for example, a battery) supplying power to all components. Optionally, the power supply may be logically connected to the processor 1410 through a power management system. In this way, functions such as charge management, discharge management, and power consumption management are implemented by using the power management system. The terminal structure shown in FIG. 14 does not constitute a limitation on the terminal. The terminal may include more or fewer components than those shown in the figure, or some components are combined, or component arrangements are different. Details are not described herein again.

It should be understood that, in this embodiment of this application, the input unit 1404 may include a graphics processing unit (Graphics Processing Unit, GPU) 14041 and a microphone 14042. The graphics processing unit 14041 processes image data of a still picture or video obtained by an image capture apparatus (such as a camera) in a video capture mode or an image capture mode. The display unit 1406 may include a display panel 14061, and the display panel 14061 may be configured in a form of a liquid crystal display, an organic light-emitting diode, or the like. The user input unit 1407 includes at least one of a touch panel 14071 and other input devices 14072. The touch panel 14071 is also referred to as a touchscreen. The touch panel 14071 may include two parts: a touch detection apparatus and a touch controller. The other input devices 14072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1401 may transmit the downlink data to the processor 1410 for processing. In addition, the radio frequency unit 1401 may send uplink data to the network-side device. Usually, the radio frequency unit 1401 includes but is not limited to an antenna, an amplifier, a transceiver, a coupler, a low noise amplifier, a duplexer, and the like.

The memory 1409 may be configured to store software programs or instructions and various data. The memory 1409 may primarily include a first storage area for storing programs or instructions and a second storage area for storing data. The first storage area may store an operating system, an application program or instructions required by at least one function (such as an audio play function and an image play function), and the like. In addition, the memory 1409 may include a volatile memory or a non-volatile memory, or the memory 1409 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1409 in this embodiment of this application includes but is not limited to these and any other suitable types of memories.

The processor 1410 may include one or more processing units. Optionally, the processor 1410 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 1410.

The radio frequency unit 1401 is configured to:
send an energy-saving wakeup signal, where
the energy-saving wakeup signal is used to wake up a first base station, the energy-saving wakeup signal carries first information, the first information is used to indicate energy-saving processing to be performed after the first base station is woken up, and the energy-saving wakeup signal includes a preamble sequence.

In this embodiment of this application, the wakeup signal including the preamble sequence carries the first information, to indicate the energy-saving processing to be performed after the first base station is woken up and assist the first base station in energy saving.

Optionally, the first information includes at least one of the following:
a terminal identity of the terminal;
a base station identity of the first base station;
transmit power of the terminal;
a cycle of a common signal expected by the terminal;
location information of the terminal;
a priority or a size of data of the terminal;
beam information or beam configuration information determined by the terminal;
an identity of a tracking area in which the terminal is located; or
preset information, where the preset information is used to demodulate the energy-saving wakeup signal.

Optionally, the energy-saving wakeup signal includes one or more preamble sequences, or the energy-saving wakeup signal includes a preamble sequence and a payload.

Optionally, in a case that the energy-saving wakeup signal includes a plurality of preamble sequences, the plurality of preamble sequences jointly carry the first information, where each of the plurality of preamble sequences carries 1-bit content of the first information.

Optionally, in a case that the energy-saving wakeup signal includes one preamble sequence, the preamble sequence meets at least one of the following:
an index of the preamble sequence corresponds to the first information;
a first preamble sequence group in which an index of the preamble sequence is located corresponds to the first information, where the first preamble sequence group is one of a plurality of preamble sequence groups formed by grouping indexes of all available preamble sequences in a cell in which the terminal is located;
a logical root sequence of the preamble sequence corresponds to the first information;
the preamble sequence corresponds to the first information; or
a second preamble sequence group in which the preamble sequence is located corresponds to the first information, where the second preamble sequence group is one of a plurality of preamble sequence groups formed by grouping all available preamble sequences in a cell in which the terminal is located.

Optionally, in a case that the energy-saving wakeup signal includes a preamble sequence and a payload, the first information is carried by the payload.

Optionally, the processor 1410 is configured to:
before the terminal sends the energy-saving wakeup signal, determine a transmission configuration of the energy-saving wakeup signal based on transmission configuration indicator information of a cell in the tracking area (tracking area) in which the terminal is located, where
the cell in the tracking area (tracking area) in which the terminal is located includes at least one of the following:
   a current serving cell of the terminal;
   a serving cell to which the terminal is recently connected; and
   any serving cell in the current tracking area (tracking area) of the terminal.

Optionally, the transmission configuration of the energy-saving wakeup signal includes at least one of the following:
a time-frequency location of the energy-saving wakeup signal; and
a quantity of the preamble sequence(s).

Optionally, the base station identity of the first base station corresponds to the index of the preamble sequence.

Optionally, the processor 1410 is configured to:
measure an SSB to obtain an SSB measurement result; and
determine, based on the SSB measurement result, that the first base station is a wakeup target.

Optionally, the radio frequency unit 1401 is configured to determine, by the terminal based on the base station identity of the first base station, the index of the preamble sequence corresponding to the base station identity; and
send, by the terminal, the energy-saving wakeup signal to the first base station based on the base station identity of the first base station and the index of the preamble sequence.

Optionally, the radio frequency unit 1401 is configured to:
send, by the terminal, the SSB measurement result to a second base station, where the SSB measurement result includes the base station identity of the first base station.

In this embodiment of this application, the wakeup signal including the preamble sequence carries the first information, to indicate the energy-saving processing to be performed after the first base station is woken up and assist the first base station in energy saving.

An embodiment of this application further provides a first base station, including a processor and a communication interface. The communication interface is configured to:
receive an energy-saving wakeup signal.

The processor is configured to:
perform energy-saving processing based on first information in the energy-saving wakeup signal, where
the energy-saving wakeup signal includes a preamble sequence.

The embodiment of the first base station corresponds to the foregoing method embodiment of the first base station, and each implementation process and implementation of the foregoing method embodiment can be applied to the embodiment of the first base station, with the same technical effect achieved.

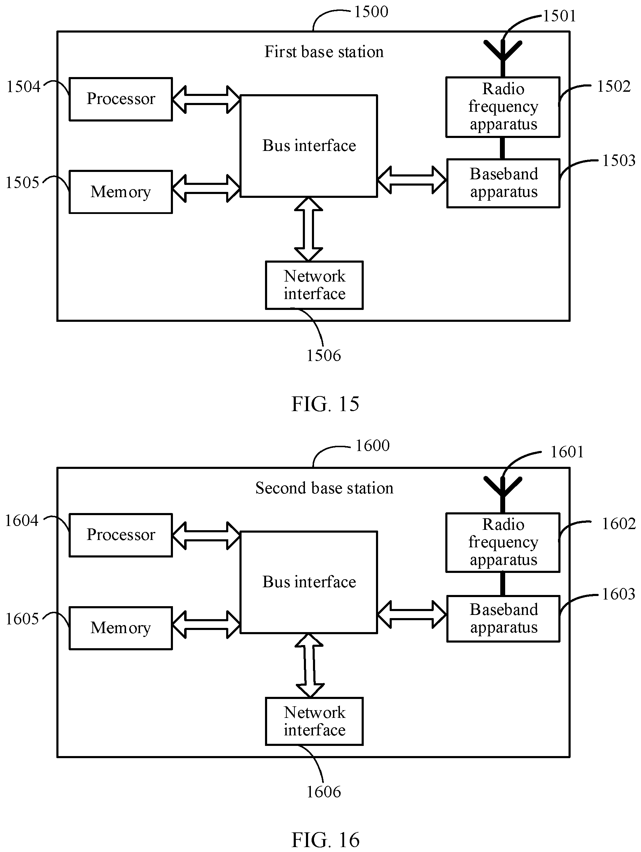

Specifically, an embodiment of this application further provides a first base station. FIG. 15 is a schematic diagram of a hardware structure of a first base station for implementing an embodiment of this application. As shown in FIG. 15, the first base station 1500 includes an antenna 1501, a radio frequency apparatus 1502, a baseband apparatus 1503, a processor 1504, and a memory 1505. The antenna 1501 is connected to the radio frequency apparatus 1502. In an uplink direction, the radio frequency apparatus 1502 receives information by using the antenna 1501, and sends the received information to the baseband apparatus 1503 for processing. In a downlink direction, the baseband apparatus 1503 processes to-be-sent information, and sends the information to the radio frequency apparatus 1502; and the radio frequency apparatus 1502 processes the received information and then sends the information out by using the antenna 1501.

The method performed by the first base station in the foregoing embodiment may be implemented in the baseband apparatus 1503. The baseband apparatus 1503 includes a baseband processor.

The baseband apparatus 1503 may include, for example, at least one baseband unit, where a plurality of chips are disposed on the baseband unit. As shown in FIG. 15, one of the chips is, for example, the baseband processor, connected to the memory 1505 by using a bus interface, to invoke a program in the memory 1505 to perform operations of a network device shown in the foregoing method embodiment.

The first base station may further include a network interface 1506, where the interface is, for example, a common public radio interface (common public radio interface, CPRI).

Specifically, the first base station 1500 in this embodiment of the present invention further includes a program or instructions stored in the memory 1505 and executable on the processor 1504. When the processor 1504 invokes the program or instructions in the memory 1505, the method performed by each module shown in FIG. 6 is performed, with the same technical effect achieved. To avoid repetition, details are not described herein again.

The radio frequency apparatus 1502 is configured to:
receive an energy-saving wakeup signal.

The processor 1504 is configured to:
perform energy-saving processing based on first information in the energy-saving wakeup signal, where
the energy-saving wakeup signal includes a preamble sequence.

In this embodiment of this application, the wakeup signal including the preamble sequence carries the first information, to indicate the energy-saving processing to be performed after the first base station is woken up and assist the first base station in energy saving.

Optionally, the processor 1504 is configured to:
determine transmit power of the first base station based on the first information, where
the first information includes at least one of the following:
   transmit power of a terminal; and
   location information of the terminal.

Optionally, the processor 1504 is configured to:
determine, by the first base station, a cycle of a common signal of the first base station based on the first information, where
the first information includes:
   a cycle of a common signal expected by a terminal.

Optionally, the processor 1504 is configured to:
determine, by the first base station based on the first information, whether to turn on all or part of hardware in an off state and/or whether to turn on all or part of bandwidth resources in an off state, where
the first information includes at least one of the following:
   a priority or a size of data of a terminal; and
   beam information or beam configuration information determined by the terminal.

Optionally, the processor 1504 is configured to:
determine, by the first base station based on the first information, that a wakeup target of the energy-saving wakeup signal is the first base station, and wake up from an energy-saving state or switch from a deep sleep state to a light sleep state, where
the first information includes at least one of the following:
   a terminal identity of a terminal;
   a base station identity of the first base station;
   an identity of a tracking area in which the terminal is located; or
   preset information, where the preset information is used to demodulate the energy-saving wakeup signal.

Optionally, the base station identity of the first base station corresponds to the preamble sequence.

In this embodiment of this application, the wakeup signal including the preamble sequence carries the first information, to indicate the energy-saving processing to be performed after the first base station is woken up and assist the first base station in energy saving.

An embodiment of this application further provides a second base station, including a processor and a communication interface. The communication interface is configured to:
receive an energy-saving wakeup signal.

The processor is configured to:
wake up, based on first information in the energy-saving wakeup signal, a first base station indicated by the first information, where the first information includes a base station identity of the first base station, where
the energy-saving wakeup signal includes a preamble sequence, and the base station identity of the first base station corresponds to the preamble sequence.

The embodiment of the first base station corresponds to the foregoing method embodiment of the first base station, and each implementation process and implementation of the foregoing method embodiment can be applied to the embodiment of the first base station, with the same technical effect achieved.

Specifically, an embodiment of this application further provides a second base station. FIG. 16 is a first schematic diagram of a hardware structure of a second base station for implementing an embodiment of this application. As shown in FIG. 16, the second base station 1600 includes an antenna 1601, a radio frequency apparatus 1602, a baseband apparatus 1603, a processor 1604, and a memory 1605. The antenna 1601 is connected to the radio frequency apparatus 1602. In an uplink direction, the radio frequency apparatus 1602 receives information by using the antenna 1601, and sends the received information to the baseband apparatus 1603 for processing. In a downlink direction, the baseband apparatus 1603 processes to-be-sent information, and sends the information to the radio frequency apparatus 1602; and the radio frequency apparatus 1602 processes the received information and then sends the information out by using the antenna 1601.

The method performed by the second base station in the foregoing embodiment may be implemented in the baseband apparatus 1603. The baseband apparatus 1603 includes a baseband processor.

The baseband apparatus 1603 may include, for example, at least one baseband unit. A plurality of chips are disposed on the baseband unit. As shown in FIG. 16, one of the chips is, for example, the baseband processor, connected to the memory 1605 by using a bus interface, to invoke a program in the memory 1605 to perform operations of the second base station shown in the foregoing method embodiment.

The second base station may further include a network interface 1606, where the interface is, for example, a common public radio interface (common public radio interface, CPRI).

Specifically, the second base station 1600 in this embodiment of the present invention further includes a program or instructions stored in the memory 1605 and executable on the processor 1604. When the processor 1604 invokes the program or instructions in the memory 1605, the method performed by each module shown in FIG. 7 is performed, with the same technical effect achieved. To avoid repetition, details are not described herein again.

An embodiment of this application further provides a second base station, including a processor and a communication interface. The communication interface is configured to:
receive an SSB measurement result.

The processor is configured to:
wake up, based on the SSB measurement result, a first base station indicated by the SSB measurement result.

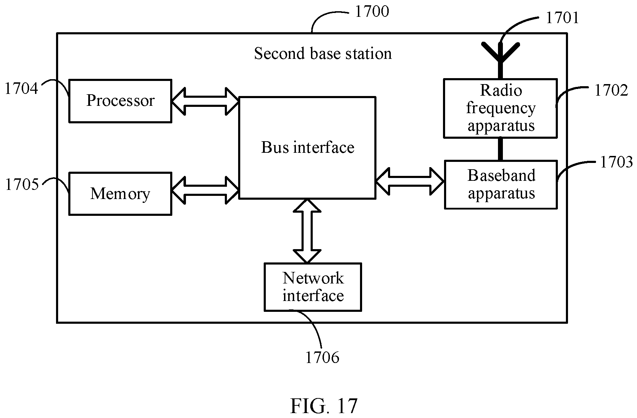

Specifically, an embodiment of this application further provides a second base station. FIG. 17 is a second schematic diagram of a hardware structure of a second base station for implementing an embodiment of this application. As shown in FIG. 17, the second base station 1700 includes an antenna 1701, a radio frequency apparatus 1702, a baseband apparatus 1703, a processor 1704, and a memory 1705. The antenna 1701 is connected to the radio frequency apparatus 1702. In an uplink direction, the radio frequency apparatus 1702 receives information by using the antenna 1701, and sends the received information to the baseband apparatus 1703 for processing. In a downlink direction, the baseband apparatus 1703 processes to-be-sent information, and sends the information to the radio frequency apparatus 1702; and the radio frequency apparatus 1702 processes the received information and then sends the information out by using the antenna 1701.

The method performed by the second base station in the foregoing embodiment may be implemented in the baseband apparatus 1703. The baseband apparatus 1703 includes a baseband processor.

The baseband apparatus 1703 may include, for example, at least one baseband unit. A plurality of chips are disposed on the baseband unit. As shown in FIG. 17, one of the chips is, for example, the baseband processor, connected to the memory 1705 by using a bus interface, to invoke a program in the memory 1705 to perform operations of the second base station shown in the foregoing method embodiment.

The second base station may further include a network interface 1706, where the interface is, for example, a common public radio interface (common public radio interface, CPRI).

Specifically, the second base station 1700 in this embodiment of the present invention further includes a program or instructions stored in the memory 1705 and executable on the processor 1704. When the processor 1704 invokes the program or instructions in the memory 1705, the method performed by each module shown in FIG. 8 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the energy-saving wakeup method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the energy-saving wakeup method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the energy-saving wakeup method, with the same technical effect achieved. To avoid repetition, details are not described herein again.

An embodiment of this application further provides an energy-saving wakeup system, including a terminal, a first base station, and a second base station. The terminal may be configured to perform the foregoing energy-saving wakeup method corresponding to the terminal. The first base station may be configured to perform the foregoing energy-saving wakeup method corresponding to the first base station. The second base station may be configured to perform the foregoing energy-saving wakeup method corresponding to the second base station.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An energy-saving wakeup method, comprising:
sending, by a terminal, an energy-saving wakeup signal, wherein
the energy-saving wakeup signal is used to wake up a first base station, the energy-saving wakeup signal carries first information, the first information is used to indicate energy-saving processing to be performed after the first base station is woken up, and the energy-saving wakeup signal comprises a preamble (preamble) sequence.

2. The energy-saving wakeup method according to claim 1, wherein the first information comprises at least one of the following:
a terminal identity of the terminal;
a base station identity of the first base station;
transmit power of the terminal;
a cycle of a common signal (common signal) expected by the terminal;
location information of the terminal;
a priority or a size of data of the terminal;
beam information or beam configuration information determined by the terminal;
an identity of a tracking area in which the terminal is located; or
preset information, wherein the preset information is used to demodulate the energy-saving wakeup signal.

3. The energy-saving wakeup method according to claim 1 or 2, wherein the energy-saving wakeup signal comprises one or more preamble sequences, or the energy-saving wakeup signal comprises a preamble sequence and a payload (payload).

4. The energy-saving wakeup method according to claim 3, wherein in a case that the energy-saving wakeup signal comprises a plurality of preamble sequences, the plurality of preamble sequences jointly carry the first information, wherein each of the plurality of preamble sequences carries 1-bit content of the first information.

5. The energy-saving wakeup method according to claim 3, wherein in a case that the energy-saving wakeup signal comprises one preamble sequence, the one preamble sequence meets at least one of the following:
an index of the preamble sequence corresponds to the first information;
a first preamble sequence group in which an index of the preamble sequence is located corresponds to the first information, wherein the first preamble sequence group is one of a plurality of preamble sequence groups formed by grouping indexes of all available preamble sequences in a cell in which the terminal is located;
a logical root sequence of the preamble sequence corresponds to the first information;
the preamble sequence corresponds to the first information; or
a second preamble sequence group in which the preamble sequence is located corresponds to the first information, wherein the second preamble sequence group is one of a plurality of preamble sequence groups formed by grouping all available preamble sequences in a cell in which the terminal is located.

6. The energy-saving wakeup method according to claim 3, wherein in a case that the energy-saving wakeup signal comprises a preamble sequence and a payload, the first information is carried by the payload.

7. The energy-saving wakeup method according to any one of claims 1 to 6, wherein before the sending, by a terminal, an energy-saving wakeup signal, the method further comprises:
determining, by the terminal, a transmission configuration of the energy-saving wakeup signal based on transmission configuration indicator information of a cell in the tracking area (tracking area) in which the terminal is located, wherein
the cell in the tracking area (tracking area) in which the terminal is located comprises at least one of the following:
a current serving cell of the terminal;
a serving cell to which the terminal is recently connected; and
any serving cell in the current tracking area (tracking area) of the terminal.

8. The energy-saving wakeup method according to claim 7, wherein the transmission configuration of the energy-saving wakeup signal comprises at least one of the following:
a time-frequency location of the energy-saving wakeup signal; and
a quantity of the preamble sequence(s).

9. The energy-saving wakeup method according to any one of claims 2 to 8, wherein the base station identity of the first base station corresponds to the index of the preamble sequence.

10. The energy-saving wakeup method according to claim 9, wherein the method further comprises:
measuring, by the terminal, a synchronization signal block SSB to obtain an SSB measurement result; and
determining, by the terminal based on the SSB measurement result, that the first base station is a wakeup target.

11. The energy-saving wakeup method according to claim 10, wherein the sending, by a terminal, an energy-saving wakeup signal comprises: determining, by the terminal based on the base station identity of the first base station, the index of the preamble sequence corresponding to the base station identity; and
sending, by the terminal, the energy-saving wakeup signal to the first base station based on the base station identity of the first base station and the index of the preamble sequence.

12. The energy-saving wakeup method according to claim 10, wherein the sending, by a terminal, an energy-saving wakeup signal comprises:
sending, by the terminal, the SSB measurement result to a second base station, wherein the SSB measurement result comprises the base station identity of the first base station.

13. An energy-saving wakeup method, comprising:
receiving, by a first base station, an energy-saving wakeup signal; and
performing, by the first base station, energy-saving processing based on first information in the energy-saving wakeup signal, wherein
the energy-saving wakeup signal comprises a preamble sequence.

14. The energy-saving wakeup method according to claim 13, wherein the performing, by the first base station, energy-saving processing based on first information in the energy-saving wakeup signal comprises:
determining, by the first base station, transmit power of the first base station based on the first information, wherein
the first information comprises at least one of the following:
transmit power of a terminal; and
location information of the terminal.

15. The energy-saving wakeup method according to claim 13, wherein the performing, by the first base station, energy-saving processing based on first information in the energy-saving wakeup signal comprises:
determining, by the first base station, a cycle of a common signal of the first base station based on the first information, wherein
the first information comprises:
a cycle of a common signal expected by a terminal.

16. The energy-saving wakeup method according to claim 13, wherein the performing, by the first base station, energy-saving processing based on first information in the energy-saving wakeup signal comprises:
determining, by the first base station based on the first information, whether to turn on all or part of hardware in an off state and/or whether to turn on all or part of bandwidth resources in an off state, wherein
the first information comprises at least one of the following:
a priority or a size of data of a terminal; and
beam information or beam configuration information determined by the terminal.

17. The energy-saving wakeup method according to claim 13, wherein the performing, by the first base station, energy-saving processing based on first information in the energy-saving wakeup signal comprises:
determining, by the first base station based on the first information, that a wakeup target of the energy-saving wakeup signal is the first base station, and waking up from an energy-saving state or switching from a deep sleep state to a light sleep state, wherein
the first information comprises at least one of the following:
a terminal identity of a terminal;
a base station identity of the first base station;
an identity of a tracking area in which the terminal is located; or
preset information, wherein the preset information is used to demodulate the energy-saving wakeup signal.

18. The energy-saving wakeup method according to claim 17, wherein the base station identity of the first base station corresponds to the preamble sequence.

19. An energy-saving wakeup method, comprising:
receiving, by a second base station, an energy-saving wakeup signal; and
waking up, by the second base station based on first information in the energy-saving wakeup signal, a first base station indicated by the first information, wherein the first information comprises a base station identity of the first base station, wherein
the energy-saving wakeup signal comprises a preamble sequence, and the base station identity of the first base station corresponds to the preamble sequence.

20. An energy-saving wakeup method, comprising:
receiving, by a second base station, an SSB measurement result; and
waking up, by the second base station based on the SSB measurement result, a first base station indicated by the SSB measurement result.

21. An energy-saving wakeup apparatus, comprising:
a first sending module, configured to send an energy-saving wakeup signal, wherein
the energy-saving wakeup signal is used to wake up a first base station, the energy-saving wakeup signal carries first information, the first information is used to indicate energy-saving processing to be performed after the first base station is woken up, and the energy-saving wakeup signal comprises a preamble sequence.

22. The energy-saving wakeup apparatus according to claim 21, wherein the first information comprises at least one of the following:
a terminal identity of a terminal;
a base station identity of the first base station;
transmit power of the terminal;
a cycle of a common signal expected by the terminal;
location information of the terminal;
a priority or a size of data of the terminal;
beam information or beam configuration information determined by the terminal;
an identity of a tracking area in which the terminal is located; or
preset information, wherein the preset information is used to demodulate the energy-saving wakeup signal.

23. The energy-saving wakeup apparatus according to claim 21 or 22, wherein the energy-saving wakeup signal comprises one or more preamble sequences, or the energy-saving wakeup signal comprises a preamble sequence and a payload.

24. The energy-saving wakeup apparatus according to claim 23, wherein in a case that the energy-saving wakeup signal comprises a plurality of preamble sequences, the plurality of preamble sequences jointly carry the first information, wherein each of the plurality of preamble sequences carries 1-bit content of the first information.

25. The energy-saving wakeup apparatus according to claim 23, wherein in a case that the energy-saving wakeup signal comprises one preamble sequence, the one preamble sequence meets at least one of the following:
an index of the preamble sequence corresponds to the first information;
a first preamble sequence group in which an index of the preamble sequence is located corresponds to the first information, wherein the first preamble sequence group is one of a plurality of preamble sequence groups formed by grouping indexes of all available preamble sequences in a cell in which the terminal is located;
a logical root sequence of the preamble sequence corresponds to the first information;
the preamble sequence corresponds to the first information; or
a second preamble sequence group in which the preamble sequence is located corresponds to the first information, wherein the second preamble sequence group is one of a plurality of preamble sequence groups formed by grouping all available preamble sequences in a cell in which the terminal is located.

26. The energy-saving wakeup apparatus according to claim 23, wherein in a case that the energy-saving wakeup signal comprises a preamble sequence and a payload, the first information is carried by the payload.

27. The energy-saving wakeup apparatus according to any one of claims 21 to 26, wherein the apparatus further comprises:
a first determining module, configured to determine, before the energy-saving wakeup signal is sent, a transmission configuration of the energy-saving wakeup signal based on transmission configuration indicator information of a cell in the tracking area (tracking area) in which the terminal is located, wherein
the cell in the tracking area (tracking area) in which the terminal is located comprises at least one of the following:
a current serving cell of the terminal;
a serving cell to which the terminal is recently connected; and
any serving cell in the current tracking area (tracking area) of the terminal.

28. The energy-saving wakeup apparatus according to claim 27, wherein the transmission configuration of the energy-saving wakeup signal comprises at least one of the following:
a time-frequency location of the energy-saving wakeup signal; and
a quantity of the preamble sequence(s).

29. The energy-saving wakeup apparatus according to any one of claims 22 to 28, wherein the base station identity of the first base station corresponds to the index of the preamble sequence.

30. The energy-saving wakeup apparatus according to claim 29, wherein the apparatus further comprises:
a first measurement module, configured to measure an SSB to obtain an SSB measurement result; and
a second determining module, configured to determine, based on the SSB measurement result, that the first base station is a wakeup target.

31. The energy-saving wakeup apparatus according to claim 30, wherein the first sending module is specifically configured to:
determine, based on the base station identity of the first base station, the index of the preamble sequence corresponding to the base station identity; and
send the energy-saving wakeup signal to the first base station based on the base station identity of the first base station and the index of the preamble sequence.

32. The energy-saving wakeup apparatus according to claim 30, wherein the first sending module is specifically configured to:
send the SSB measurement result to a second base station, wherein the SSB measurement result comprises the base station identity of the first base station.

33. An energy-saving wakeup apparatus, comprising:
a first receiving module, configured to receive an energy-saving wakeup signal; and
a first processing module, configured to perform energy-saving processing based on first information in the energy-saving wakeup signal, wherein
the energy-saving wakeup signal comprises a preamble sequence.

34. The energy-saving wakeup apparatus according to claim 33, wherein the first processing module is specifically configured to:
determine transmit power of a first base station based on the first information, wherein
the first information comprises at least one of the following:
transmit power of a terminal; and
location information of the terminal.

35. The energy-saving wakeup apparatus according to claim 33, wherein the first processing module is specifically configured to:
determine a cycle of a common signal of a first base station based on the first information, wherein
the first information comprises:
a cycle of a common signal expected by a terminal.

36. The energy-saving wakeup apparatus according to claim 33, wherein the first processing module is specifically configured to:
determine, based on the first information, whether to turn on all or part of hardware in an off state and/or whether to turn on all or part of bandwidth resources in an off state, wherein
the first information comprises at least one of the following:
a priority or a size of data of a terminal; and
beam information or beam configuration information determined by the terminal.

37. The energy-saving wakeup apparatus according to claim 33, wherein the first processing module is specifically configured to:
determine, based on the first information, that a wakeup target of the energy-saving wakeup signal is a first base station, and wake up from an energy-saving state or switch from a deep sleep state to a light sleep state, wherein
the first information comprises at least one of the following:
a terminal identity of a terminal;
a base station identity of the first base station;
an identity of a tracking area in which the terminal is located; or
preset information, wherein the preset information is used to demodulate the energy-saving wakeup signal.

38. The energy-saving wakeup apparatus according to claim 37, wherein the base station identity of the first base station corresponds to the preamble sequence.

39. An energy-saving wakeup apparatus, comprising:
a second receiving module, configured to receive an energy-saving wakeup signal; and
a first wakeup module, configured to wake up, based on first information in the energy-saving wakeup signal, a first base station indicated by the first information, wherein the first information comprises a base station identity of the first base station, wherein
the energy-saving wakeup signal comprises a preamble sequence, and the base station identity of the first base station corresponds to the preamble sequence.

40. An energy-saving wakeup apparatus, comprising:
a third receiving module, configured to receive an SSB measurement result; and
a second wakeup module, configured to wake up, based on the SSB measurement result, a first base station indicated by the SSB measurement result.

41. A terminal, comprising a processor and a memory, wherein the memory stores a program or instructions executable on the processor, and when the program or instructions are executed by the processor, the energy-saving wakeup method according to any one of claims 1 to 12 is implemented.

42. A first base station, comprising a processor and a memory, wherein the memory stores a program or instructions executable on the processor, and when the program or instructions are executed by the processor, the energy-saving wakeup method according to any one of claims 12 to 18 is implemented.

43. A second base station, comprising a processor and a memory, wherein the memory stores a program or instructions executable on the processor, and when the program or instructions are executed by the processor, the energy-saving wakeup method according to claim 19 is implemented.

44. A second base station, comprising a processor and a memory, wherein the memory stores a program or instructions executable on the processor, and when the program or instructions are executed by the processor, the energy-saving wakeup method according to claim 20 is implemented.

45. A readable storage medium, wherein the readable storage medium stores a program or instructions, and when the program or instructions are executed by a processor, the energy-saving wakeup method according to any one of claims 1 to 20 is implemented.
